# EUROPEAN PATENT APPLICATION

(11) **EP 3 524 834 A1**
(43) Date of publication of application: **14.08.2019**
(21) Application number: 19156047.3
(22) Date of filing: 07.02.2019
(51) Int. Cl.: F16C 1/20, B64D 31/14, F16C 1/28, F16C 33/38, F16C 33/42

(54) **BALL BEARING CONTROL ASSEMBLIES**

(30) Priority: 09.02.2018 US 201815893121
(71) Applicant: Aerocontrolex Group, Inc., South Euclid, OH 44121 (US)
(72) Inventor: HANNA, Peter, TWINSBURG, OH Ohio 44087 (US); BENNETT, Cameron, CHARDON, OH Ohio 44024 (US); PONSART, Gregory, WILLOWICK, OH Ohio 44095 (US)
(74) Representative: Nony

(57) **Abstract**

A ball bearing control assembly includes a cylindrical flexible sheath. A pair of stationary races defines a first raceway. A force transmission member defines a second raceway on opposing sides. Rolling members have a center point and are in rolling contact with the first and the second raceways as the force transmission member translates axially within the sheath. A ball guide interacts with the rolling members to constrain the majority of the rolling member. In one example, the ball guide interacts with the rolling members at two locations on each axial side of the rolling members. The two locations are positioned at different distances from the second raceway. The stationary races are located between the ball guide and the flexible sheath, and the ball guide is located between the stationary races and the force transmission member. Other examples can include two ball guides.

## Description

### BACKGROUND

### 1. Field of the Disclosure

The present application is directed to a force transmitting remote control assembly, and more particularly to a force transmitting remote control assembly having ball guides that reduce and/or eliminate jamming of rolling members.

### 2. Description of Related Art

Known force transmitting remote control assemblies such as ball bearing control assemblies are sometimes provided with ball guides that interact with rolling members at only one location. During normal service the ball guide can kink or bend creating a large enough clearance, enabling a rolling member to, if displaced, lodge itself between the ball guide and a force transmitting member. Alternatively, the rolling member may lodge itself between the ball guide and a stationary race. The lodged rolling member can then jam the force transmitting remote control assembly rendering it unusable. This can lead to an undesired control failure of large machinery.

Furthermore, many force transmitting remote control assemblies are not configured to withstand relatively harsh environmental conditions including large temperature variations, environmental vibration, etc. Accordingly, improvements to force transmitting remote control assemblies are desired.

### SUMMARY

The following presents a simplified summary in order to provide a basic understanding of some example aspects of the disclosure. This summary is not an extensive overview. Moreover, this summary is not intended to identify critical elements of the disclosure nor delineate the scope of the disclosure. The sole purpose of the summary is to present some concepts in simplified form as a prelude to the more detailed description that is presented later.

According to one aspect of the present disclosure, the subject application involves a ball bearing control assembly. The ball bearing control assembly includes a flexible sheath, where the sheath is generally cylindrical. The ball bearing control assembly also includes a pair of stationary races, each stationary race defines a first raceway. The ball bearing control assembly further includes a plurality of rolling members, where the rolling members have a center point and are in rolling contact with the first raceway. The ball bearing control assembly still further includes a force transmission member, where the force transmission member defines a second raceway on each of opposing sides. The rolling members are configured to be in rolling contact with the second raceway, and the force transmission member is configured to translate axially within the sheath. The ball bearing control assembly also includes a ball guide, where the ball guide includes structure configured to interact with the rolling members at two locations on each axial side of the rolling members. The two locations are positioned at different distances from the second raceway. The stationary races are located between the ball guide and the flexible sheath, where the stationary races are located diametrically opposite each other. The ball guide is located between the stationary races and the force transmission member.

According to another aspect of the present disclosure, the subject application involves a ball bearing control assembly. The ball bearing control assembly includes a flexible sheath, where the sheath is generally cylindrical. The ball bearing control assembly further includes a pair of stationary races, each stationary race defines a first raceway. The ball bearing control assembly still further includes a plurality of rolling members, where the rolling members have a center point and are in rolling contact with the first raceway. The ball bearing control assembly also includes a force transmission member, where the force transmission member defines a second raceway on each of opposing sides. The rolling members are configured to be in rolling contact with the second raceway, and the force transmission member is configured to translate axially within the sheath. The ball bearing control assembly further includes a pair of ball guides, where the ball guides include structure configured to interact with the rolling members at two locations on each axial side of the rolling members. The two locations are positioned at different distances from the second raceway. The stationary races are located between the flexible sheath and one of the ball guides, where the stationary races are located diametrically opposite each other. The ball guides are located between the stationary races and the force transmission member.

According to still another aspect of the present disclosure, the subject application involves a ball bearing control assembly. The ball bearing control assembly includes a flexible sheath that is generally cylindrical. The ball bearing control assembly also includes a pair of stationary races and each stationary race defines a first raceway. The ball bearing control assembly further includes a plurality of rolling members having a diameter. The rolling members have a center point and are in rolling contact with the first raceway. The ball bearing control assembly still further includes a force transmission member that defines a second raceway on each of opposing sides. The rolling members are configured to be in rolling contact with the second raceway, and the force transmission member is configured to translate axially within the sheath. The ball bearing control assembly also includes a ball guide that is located between one of the pair of stationary races and the force transmission member. The majority of the rolling member is constrained. The stationary races are located between the ball guide and the flexible sheath diametrically opposite each other.

### BRIEF DESCRIPTION OF THE DRAWINGS

The foregoing and other aspects of the present disclosure will become apparent to those skilled in the art to which the present disclosure relates upon reading the following description with reference to the accompanying drawings, in which:
FIG. 1 is a partially exploded view of a ball bearing control assembly according to an aspect of the present disclosure;
FIG. 2 is a perspective cross-sectional view of the ball bearing control assembly of FIG. 1;
FIG. 3 is a cross-sectional elevation view of the ball guide and a rolling member of FIG. 1;
FIG. 4 is a perspective view of a ball guide as used in the ball bearing control assembly of FIG. 1;
FIG. 5 is schematic view of the ball bearing control assembly of FIG. 1 showing a first end and a second end;
FIG. 6 is similar to FIG. 5, showing a rotation, or helixing, prior to a bend in the ball bearing control assembly;
FIG. 7 is similar to FIG. 3, showing a single-layer ball guide;
FIG. 8 is similar to FIG. 7, showing the single-layer ball guide with an enlarged volume proximal to an aperture for a rolling member; and
FIG. 9 is similar to FIG. 8, showing the single-layer ball guide with a substantially uniform thickness.

### DETAILED DESCRIPTION

Example embodiments that incorporate one or more aspects of the present disclosure are described and illustrated in the drawings. These illustrated examples are not intended to be a limitation on the present disclosure. For example, one or more aspects of the present disclosure can be utilized in other embodiments and even other types of devices. Moreover, certain terminology is used herein for convenience only and is not to be taken as a limitation on the present disclosure. Still further, in the drawings, the same reference numerals are employed for designating the same elements.

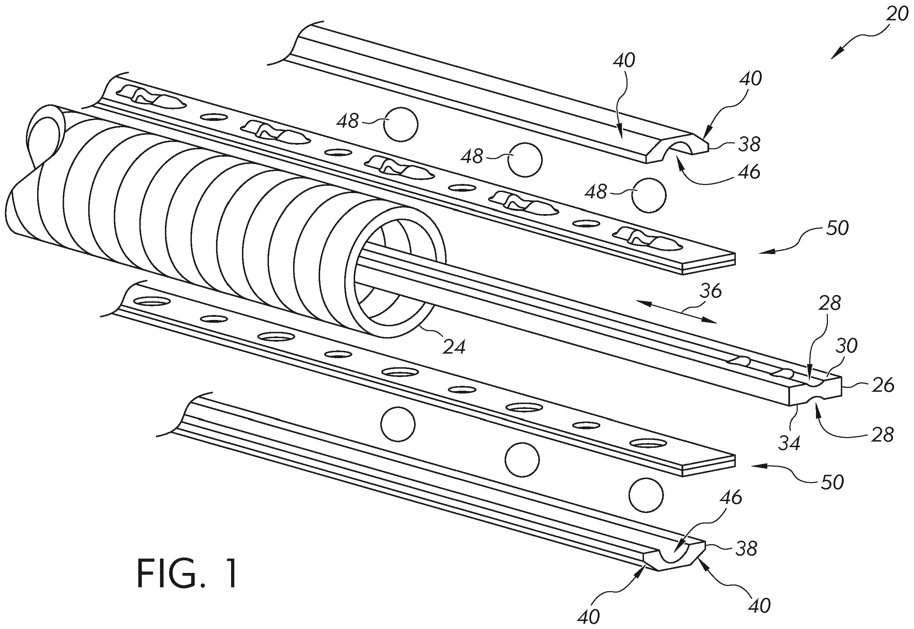

Turning to FIG. 1, a partially exploded view of a ball bearing control assembly 20 is shown. The ball bearing control assembly 20 includes a flexible sheath 24 which can include a conduit that is spiral-formed, seamed, or any suitable construction configured to meet a mechanical standards for conduits of this type. In one example, the flexible sheath can comprise a stainless steel alloy. The ball bearing control assembly 20 also includes a force transmission member 26 that is located generally at the center of the flexible sheath 24. In one example, the force transmission member 26 is constructed of a nickel-based alloy, however, any suitable material is also contemplated. Additionally, the force transmission member 26 can be roll formed, but any suitable production method is satisfactory. A nickel-based alloy can increase the temperature resistance of the force transmission member 26 such that it can operate at relatively high temperatures without experiencing a decline in performance. As shown in FIG. 1, the force transmission member 26 can define a second raceway 28 on each of opposing sides 30, 34 of the force transmission member 26. In another example, the second raceway 28 can have a relatively smooth surface in order to limit friction between the second raceways 28 and other components of the ball bearing control assembly 20 as will be apparent.

As will be discussed further below, the ball bearing control assembly 20 and particularly the force transmission member 26 are designed to translate an input load at a first location to an output load at a second location. The input load and the output load are typically linear translation, however the ball bearing control assembly 20 is configured to enable the assembly to both bend and helix (i.e., twist) such that the input load and the output load do not have to be located along a continuous line or within a single plane. In fact, the input load and the output load do not have to have any particular geometric relationship to each other.

In order to accomplish this load transmission along a non-linear path, the force transmission member 26 translates axially within the flexible sheath 24 in the direction shown by arrow 36. The force transmission member 26 is interposed between two stationary races 38 that each lie in planes generally parallel to the force transmission member 26. Portions of the stationary races 38 that are located proximate to the flexible sheath 24 can include rounded surfaces 40 configured to cooperate with the sheath's interior surface 44. The stationary races 38 can be comprised of a nickel-based alloy and can be hardened to a particular hardness in order to reduce wear and increase the expected life cycle of the ball bearing control assembly 20. In one example, the stationary races 38 have material properties enabling the stationary races 38 to withstand heating and cooling cycles to relatively high temperatures without tempering the material or taking a permanent shape deformation. Similar to the force transmission member 26, the stationary races 38 include a first raceway 46 that can have a relatively smooth surface.

The ball bearing control assembly 20 further includes rolling members 48 located between the force transmission member 26 and each stationary race 38. In one example, the rolling members 48 can be ball bearings and can include a composition that is ceramic, such as a silicon nickel composition, however any composition is contemplated, so long as the composition can withstand the required operating conditions expected in typical use, such as near or within frames of jet engines. The rolling members 48 are configured to cooperate with the force transmission member 26 and the stationary races 38 to produce a relatively high efficiency linear translation of the force transmission member 26.

As is often necessary to maintain this relatively high efficiency, the rolling members 48 are maintained at particular positions relative to the force transmission member 26 and the stationary races 38. The ball bearing control assembly 20 further includes a ball guide 50 interposed between the force transmission member 26 and the stationary races 38.

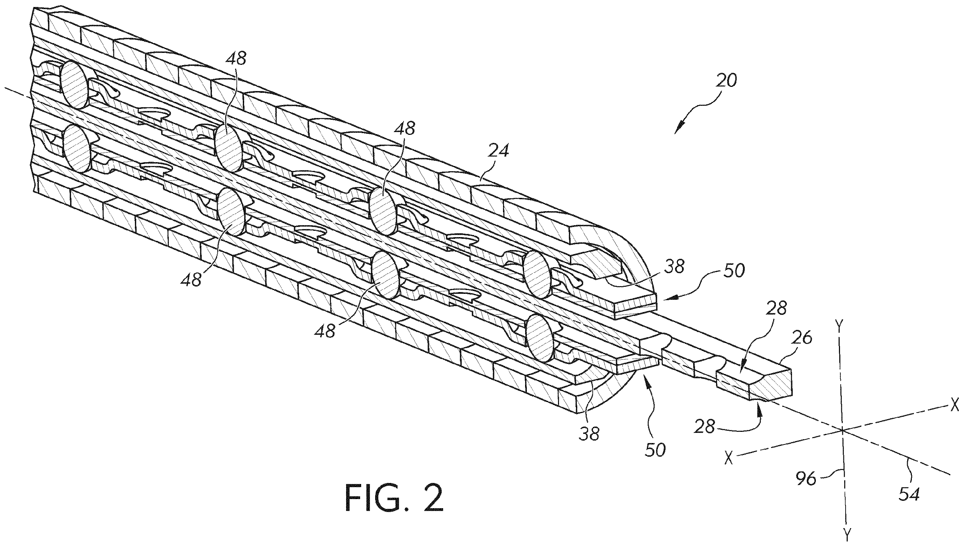

Turning to FIG. 2, a cross-sectional view of a ball bearing control assembly 20 is shown. The force transmission member 26 is located centrally within the flexible sheath 24, generally along the axial centerline 54 of the flexible sheath 24. The rolling members 48 cooperate with the force transmission member 26 and its second raceway 28. Each rolling member 48 is located or positioned by the ball guide 50 that is placed between the force transmission member 26 and the stationary race 38. The structure as described is configured to transmit radial loads from the force transmission member 26 through the rolling members 48 onto the stationary races 38.

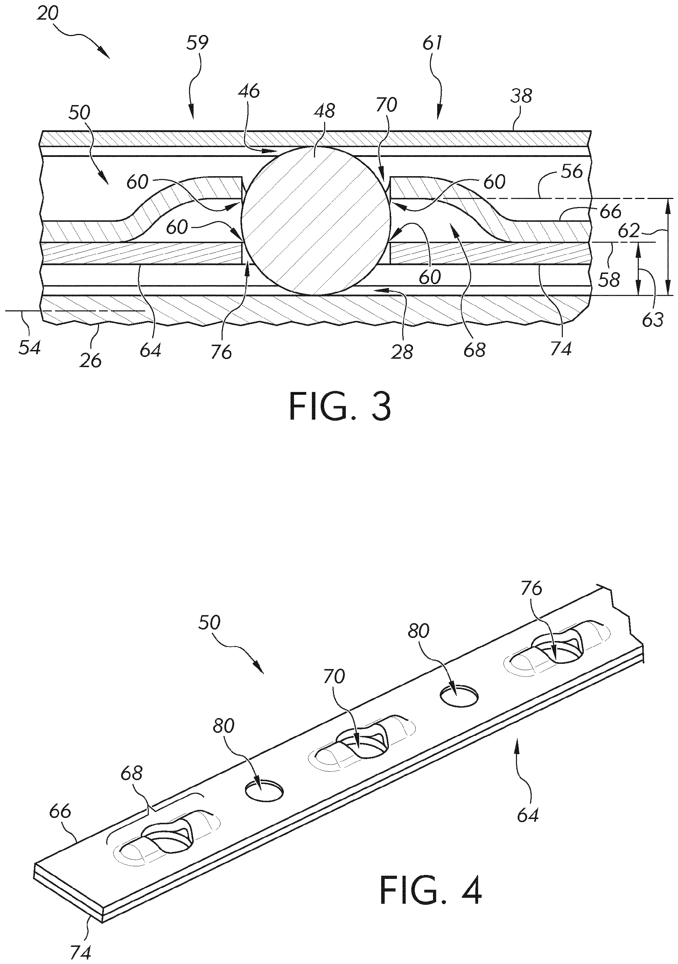

Turning to FIG. 3, a cross-sectional elevation view the ball guides 50 and the rolling members is shown. The ball guides 50 include structure to interact with the rolling members 48 at two locations on each axial side of the rolling members 48. In one example, the structure can be an edge 60 of the ball guide 50 that intermittently contacts the rolling member 48 as it translates along the second and first raceways 28, 46. For example, on the left side 59 of the rolling member 48 shown in FIG. 3, two edges 60 of the ball guide 50 interact with the rolling member 48. Similarly, on the right side 61 of the rolling member 48, two edges 60 of the ball guide 50 interact with the rolling member 48. On both the left side 59 and the right side 61, the two locations 60 (e.g., edges) are designed to be at different distances from the second raceway 28 of the force transmission member 26. For example, the upper edges 60 on both the left side 59 and the right side 61 are at a distance 62 from the second raceway 28. The lower edges 60 on both the left side 59 and the right side 61 are at a distance 63 from the second raceway 28.

In another example, the structure that interacts with the rolling member 48 can include curved surfaces corresponding to the rolling member 48 outside diameter, etc. In fact, many variations of structures can meet the intent of the structures configured to interact with the rolling members 48 at two locations on each axial side of the rolling members 48 with the two locations being positioned at different distances from the second raceway 28 of the force transmission member 26.

Turning to FIG. 4, the two location interaction with the rolling members 48 can be accomplished by a ball guide 50 that includes a two-piece stack 64. In other words, there can be two components in each ball guide 50, one stacked upon the other. In other examples not shown, the ball guide 50 may include a one-piece stack or more than two pieces in the stack 64. No matter the number of pieces in the stack 64 of the ball guide 50, the ball guides 50 include structure to interact with the rolling members 48 at two locations on each axial side of the rolling members 48 with the two locations being positioned at different distances from the second raceway 28. It is worthy of note that the two locations (e.g., edges 60) being positioned at different distances from the second raceway 28 does not require a two-piece stack 64. Additionally, each ball guide 50 lies in a plane that is generally parallel to the force transmission member 26, and can be located on opposite sides of the axial centerline 54 (best seen in FIG. 1).

The outermost piece 66 of the two-piece stack 64 can include a series of embossed areas 68, each embossed area 68 defining an aperture 70 through which a portion of a rolling member 48 may pass. The innermost piece 74 of the two-piece stack 64 can include a regular interval of apertures 76 through which a portion of the rolling members 48 can pass. In one example, a diameter of the apertures 70, 76 is greater than a diameter of the rolling members 48, such that the rolling member 48 is free to pass entirely through the ball guide 50. In another example, the rolling member 48 can be captured within the ball guide 50. In this example, a diameter of the rolling member 48 can be greater than the diameter of the apertures 70, 76, and the rolling member is prevented from leaving the bounds of the ball guide 50, with relatively small portions of the rolling member 48 passing through the outermost piece 66 and the innermost piece 74.

The effect of this two-piece stack 64 interacting with the rolling members 48 at two different locations (e.g., edges 60) along lines 56, 58 (best seen in FIG. 3) is to help ensure that the rolling member 48 does not move to an undesired location within the assembly.

For example, known ball bearing control assemblies can include a ball guide with an interaction point with the rolling member at only one location. In other examples, the majority of the rolling member is not constrained in an axial direction. In some cases during its service life, the ball guide to can buckle or kink. Also, as the ball bearing control assembly bends to accommodate a particular path through an airframe, internal clearances between the components of the assembly increase. These buckles, kinks, and increased internal clearances can create a larger space into which the rolling member can pass and get stuck between a portion of the ball guide and the force transmission member. In these cases, the ball bearing control assembly can jam and is rendered ineffective. A jammed ball bearing control assembly can be quite problematic in the field such as in a jet engine throttle control. As such, the ball bearing control assembly 20 ball guide 50 described herein includes interaction points (e.g., edges 60) with the rolling members 48 at two locations on each axial side of the rolling member 48 (at lines 56, 58) in order to reduce and/or prevent the occurrence of the rolling member 48 lodging itself between a portion of the ball guide 50 and the force transmission member 26.

Each piece 66, 74 of the ball guide 50 can be constructed of any suitable material. In one example, each piece 66, 74 is constructed of stainless steel. In another example, one or more of the pieces 66, 74 is constructed of a nickel-based alloy. The individual pieces 66, 74 of the ball guide 50 can be stampings and can be attached to each other by any suitable method including, but not limited to, spot welding. FIG. 4 shows the attached arrangement of the two-piece ball guide 50 including the outermost piece 66 the innermost piece 74 and the embossed areas 68. In one example, one or more of the pieces 66, 74 of the ball guide 50 can include further indentations 80 which can serve varied purposes such as positive location of the innermost piece 74 to the outermost piece 66, indexing locations for material handling, or locations for attachment means for the two pieces 66, 74 including, but not limited to, spot welding, riveted connections, staked connections, etc. In the case of the ball guide 50 being formed of a plastic and/or extruded material, various other attachment methods are also contemplated. Stacked and single-piece ball guides 50 can be constructed in any suitable manner including, but not limited to: material with punch extruded holes having rolled lips, additive manufacturing materials and methods, etc.

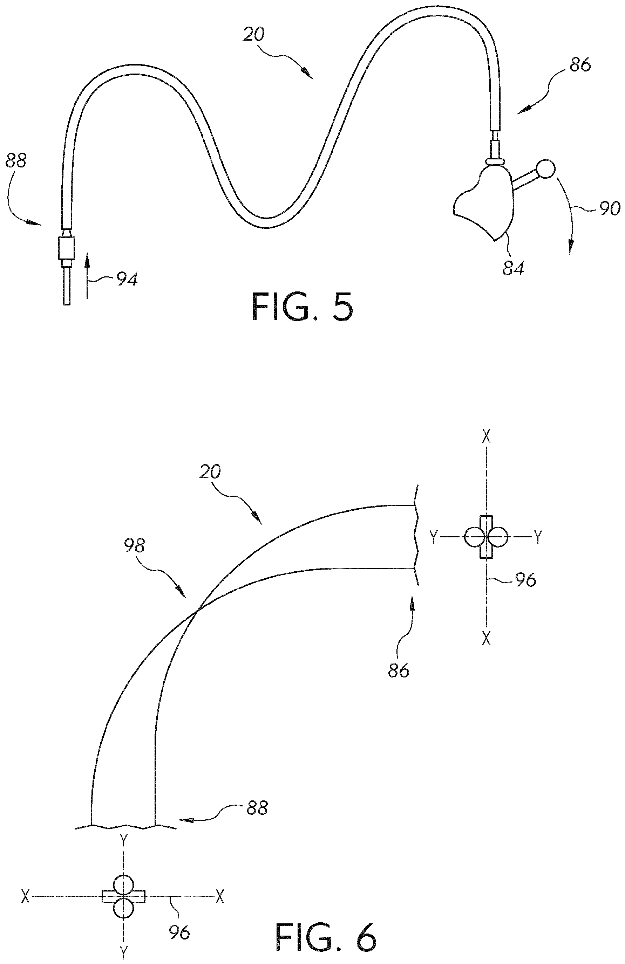

Turning to FIG. 5, a schematic arrangement of a ball bearing control assembly 20 is shown including a controller 84 at a first end 86 of the ball bearing control assembly 20. The controller 84 can be located in an area such as a cockpit of an airplane (not shown), while a second end 88 of the ball bearing control assembly 20 can be located in a location such as a jet engine (not shown) which can be inhospitable to various other types of control structures. It is to be appreciated that motion of the controller 84 (e.g., downward as shown by arrow 90) causes a translation of force along the ball bearing control assembly 20, through bends and turns, to effect a force and movement at the second end 88 in the direction of arrow 94.

Turning to FIG. 6, another schematic arrangement of the ball bearing control assembly 20 is shown. It is to be appreciated that the ball bearing control assembly 20 is designed to be a force transmission device from one location to another distant location. The described force transmission member can be reciprocated longitudinally within the flexible sheath by actuation at the first end 86 of the ball bearing control assembly 20 to cause corresponding actuation of a device at the second end 88 of the ball bearing control assembly 20. While there may be a tortuous path between the first end 86 and the second end 88, the ball bearing control assembly 20 is configured to bend about only one plane. Also referring back to FIG. 2, the ball bearing control assembly 20 is configured to bend about the XX plane as shown by the legend 96. As such, when the ball bearing control assembly 20 needs to be curved about the YY plane, an installer will rotate the ball bearing control assembly 20 90° about the longitudinal axis as shown in area 98 in FIG. 6. Those having ordinary skill in the art will understand that bends respective to other planes will have appropriate angles of helix, or twist, corresponding to each plane.

Returning to FIG. 3, one example of the ball bearing control assembly 20 includes a ball guide 50 with structure configured to cooperate with the rolling member 48 at multiple locations along lines 56, 58. In the shown example, the ball guide 50 is configured to contain a majority of the rolling member 48 when viewed at the equator (parallel to the plane of the force transmission member 26) of the rolling member 48, no matter the degree of helix of the ball bearing control assembly 20.

It is to be appreciated that the described apparatus is scalable to various sizes and applications, in one example the ball bearing control assembly 20 can be between several feet and hundreds of feet long. As is to be appreciated, the various components of the ball bearing control assembly 20 can be designed and sized to accommodate a wide variety of particular applications depending upon many factors such as force requirements, service life requirements, available space envelope, etc.

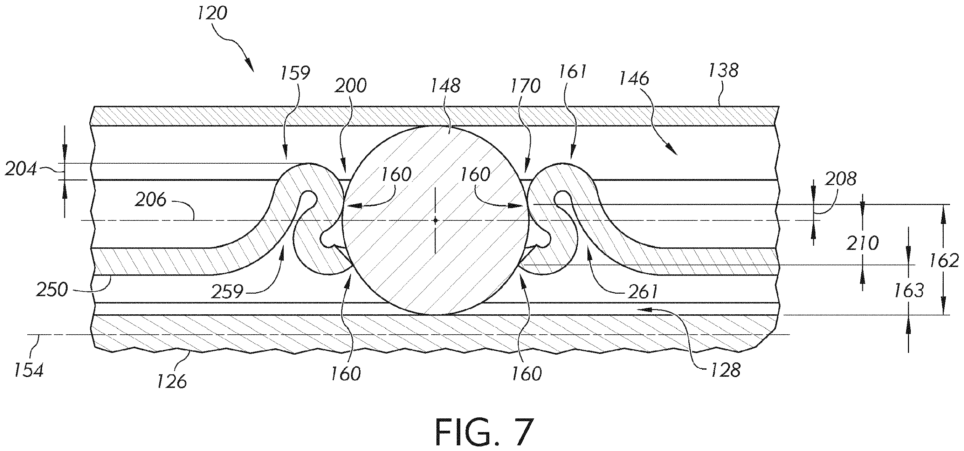

Turning to FIG. 7, a ball bearing control assembly 120 is shown with a single-layer ball guide 150. To this point, the disclosure has discussed multiple-layer ball guides, however it is contemplated that the ball guide 150 can be of a single, unitary piece such as the ball guide 150 shown in FIG. 7. As an aperture 170 is made in the ball guide 150, at least a portion of a circumference 200 can be crimped or otherwise formed to create structure configured to interact with the rolling members 148 at two locations 160 on each axial side 159, 161 of the rolling members 148. The two locations 160 are positioned at different distances 162, 163 from the second raceway 128 of the force transmission member 126. As such, the number of contact locations 160 between the ball guide 150 and the rolling members 148 can be independent of the number of layers within the ball guide 150. The shown structure is but one example, and any suitable structure is contemplated.

It is also to be noted that FIG. 7 shows a portion of the ball guide 150 can extend into the first raceway 146 of the stationary race 138. While FIGS. 3 and 7 only show one side of the ball bearing control assembly 20, 120 (the half above the axial centerline 54, 154), this extension of the ball guide 50, 150 into the first raceway 46, 146 can be on one or both halves of the axial centerline 54, 154. In the example of FIG. 3, the embossed area 68 can extend into the first raceway 146 of at least one of the stationary races 138. Returning to FIG. 7, the distance of the extension into the first raceway 146 is represented by dimension 204.

Additionally, two contact locations 160 can be located on each axial side 259, 261 of the rolling members 148. As shown in FIG. 7, the locations 160 for each axial side 259, 261 can be on either side of a center line 206 of the rolling member 148 that is generally parallel to the second raceway 128 of the force transmission member 126. The distances of the locations 260 from the center line 206 are represented by dimensions 208 and 210.

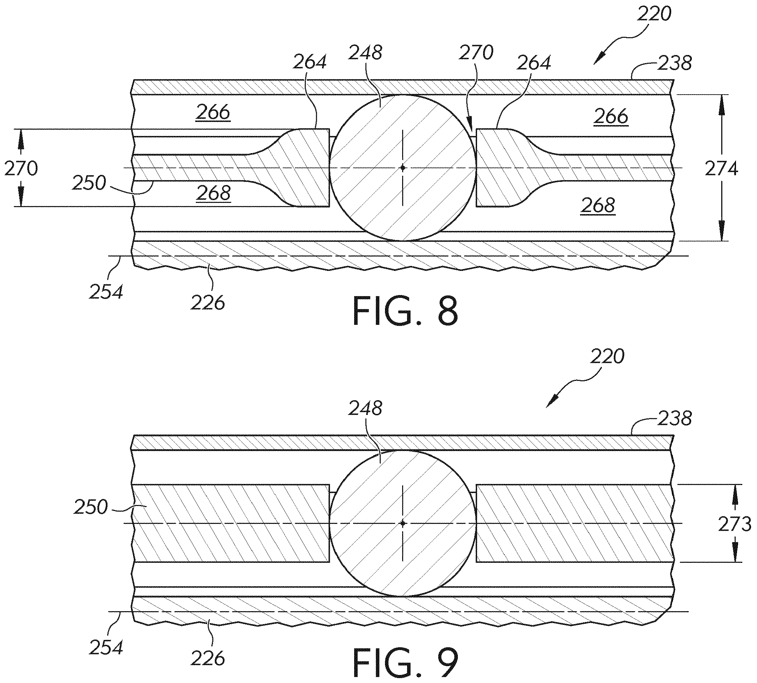

Turning to FIG. 8, a ball bearing control assembly 220 is shown with a single-layer ball guide 250 that does not include two contact points on each side of the rolling member 248. To this point, the disclosure has discussed ball guides having structure that interacts with the rolling members at at least two locations on each axial side of the rolling members, however it is contemplated that the ball guide 250 can interact with the rolling member 248 at one location on each axial side.

The ball guide 250 includes enlarged volumes 264 proximal to the apertures 270 that permit a portion of the rolling member 248 to pass through the ball guide 250. The shown example demonstrates how the majority of the rolling member 248 is constrained in an axial direction (parallel to axial centerline 254). This means that a majority of the diameter of the rolling member 248 is not able to pass between any gap that exists between the ball guide 250 and the stationary race 238. This prevents the rolling member 248 from moving to a position in the area of 266 in FIG. 8. Similarly, a majority of the diameter of the rolling member 248 is not able to pass between any gap that exists between the ball guide 250 and the force transmission member 226. This prevents the rolling member 248 from moving to a position in the area of 268 in FIG. 8.

While there may be a multitude of structures to help ensure that majority of the rolling member 248 is constrained, two examples will be described. In a first example, the ball guide 250 includes structure 264 having a dimension 270 measured on a perpendicular between the force transmission member 226 and one of the pair of stationary races 238. The length of the dimension 270 is equal to or greater than the majority of the rolling member 248. For certain arrangements, this relationship between dimension 270 and the length of the diameter of the rolling member 248 can prevent passage of the rolling member into areas 266 and 268.

In another example, the ball bearing control assembly 220 includes a free space dimension 274 measured on a perpendicular between the force transmission member 226 and one of the pair of stationary races 238. The ball guide 250 includes structure having an object dimension 270 measured on a perpendicular between the force transmission member 226 and one of the pair of stationary races 238. The difference between the free space dimension 274 and the object dimension 270 is less than a diameter of the rolling member 248. This relationship between object dimension 270 and the length of the free space dimension 274 can prevent passage of the rolling member into areas 266 and 268. This remains true even when the ball guide 250 is displaced to a position that touches either the force transmission member 226 or the stationary race 238 which may occur in a bend location or kink. In other words, even if the ball guide 250 is displaced transversely from the axial centerline 254 (up or down in FIG. 8) as far as it can possibly go, there simply is not enough space for the rolling member 248 to move between any portion of the ball guide 250 and the force transmission member 226 or between the ball guide 250 and one of the pair of stationary races 238 to create a jamming condition.

Turning to FIG. 9, it is also possible for the ball guide 250 to be of a substantially uniform thickness as shown by dimension 273 while being equal to or greater than the majority of the rolling member 248. However, this arrangement may limit the amount of bend that can be placed into the ball bearing control assembly 220. Additionally, this arrangement has the potential to greatly increase the number of contact points between the ball guide 250 and other structures within the ball bearing control assembly 220, which can significantly increase the friction generated within the ball bearing control assembly 220 during movement of the force transmission member 226.

There are several benefits that can be appreciated through the structure of the present disclosure. Primarily, the reduction and/or elimination of the possibility of the rolling member 48 moving from an intended location to a position between a ball guide 50 and a stationary race 38 where the rolling member can then jam the operation of the ball bearing control assembly 20. In one example, the ball bearing control assembly 20 with the structure and materials discussed can attain an overall efficiency above 90%. Another benefit can include the fact that the individual components of the ball bearing control assembly 20 can be heat-treated while maintaining corrosion resistance at relatively high temperatures. Yet another benefit can include a lack of permanent shape deformation with frequent heating and cooling cycles.

Furthermore, the ball bearing control assembly 20 as described is designed to withstand great temperature variation and vibration while having a relatively high number of operating cycles in its expected life duty cycle. Another potential benefit can include the nonmagnetic properties of the ball bearing control assembly as a whole, enabling the ball bearing control assembly 20 to be unaffected by magnetic fields that may exist near the path of the ball bearing control assembly 20. Finally, the described device permits very high tensile and compression forces to be transmitted, even in sinuous paths having bends of small radius of curvature, in any plane, with relatively high efficiency and relatively high accuracy.

While this disclosure has been written in conjunction with the specific embodiments described above, it is evident that many alternatives, combinations, modifications and variations are apparent to those skilled in the art. Accordingly, the described embodiments of this disclosure, as set forth above are intended to be illustrative only, and not in a limiting sense. Various changes can be made without departing from the spirit and scope of this disclosure. Combinations of the above embodiments and other embodiments will be apparent to those of skill in the art upon studying the above description and are intended to be embraced therein. Therefore, the scope of the present disclosure is defined by the appended claims, and all devices, processes, and methods that come within the meaning of the claims, either literally or by equivalence, are intended to be embraced therein. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A ball bearing control assembly (20), the ball bearing control assembly (20) **characterized by**:
a flexible sheath (24), wherein the sheath (24) is generally cylindrical;
a pair of stationary races (38), each stationary race (38) defines a first raceway (46);
a plurality of rolling members (48), wherein the rolling members (48) have a center point and are in rolling contact with the first raceway (46);
a force transmission member (26), wherein the force transmission member (26) defines a second raceway (28) on each of opposing sides (30, 34) and the rolling members (48) are configured to be in rolling contact with the second raceway (28), and the force transmission member (26) is configured to translate axially within the sheath (24); and
a ball guide (50), wherein the ball guide (50) comprises structure configured to interact with the rolling members (48) at at least two locations on each axial side of the rolling members (48), wherein the at least two locations are positioned at different distances from the second raceway (28),
wherein the stationary races (38) are located between the ball guide (50) and the flexible sheath (24), wherein the stationary races (38) are located diametrically opposite each other,
wherein the ball guide (50) is located between one of the pair of stationary races (38) and the force transmission member (26).

2. The ball bearing control assembly (20) according to claim 1, **characterized in that** the ball guide (50) comprises a stack (64) of multiple pieces.

3. The ball bearing control assembly (20) according to claim 2, **characterized in that** the stack (64) of multiple pieces comprises multiple pieces that are attached to each other.

4. The ball bearing control assembly (20) according to claim 1, **characterized in that** the ball guide (50) defines an aperture (70) and a portion of the rolling member (48) passes through the aperture (70).

5. The ball bearing control assembly (20) according to claim 1, **characterized in that** at least one of the flexible sheath (24) and the ball guide (50) comprises a stainless steel alloy.

6. The ball bearing control assembly (20) according to claim 1, **characterized in that** at least one of the stationary races (38), the force transmission member (26), and the ball guide (50) comprises a nickel-based alloy.

7. The ball bearing control assembly (20) according to claim 1, **characterized in that** the ball guide (50) comprises a single layer.

8. The ball bearing control assembly (20) according to claim 1, **characterized in that** at least one of the at least two locations is positioned on one side of a center line (206) of the rolling member (48) that is generally parallel to the second raceway (28), and at least one other of the at least two locations is positioned on the other side of the center line (206) of the rolling member (48) that is generally parallel to the second raceway (28).

9. The ball bearing control assembly (20) according to claim 1, **characterized in that** the ball bearing control assembly (20) further comprises a pair of ball guides (50), wherein:
the stationary races (38) are located between the flexible sheath (24) and one of the ball guides (50), and
the ball guides (50) are located between the stationary races (38) and the force transmission member (26).

10. The ball bearing control assembly (20) according to claim 9, **characterized in that** the pair of ball guides (50) further comprise a stack (64) of multiple pieces, including an outermost piece (66) and an innermost piece (74).

11. The ball bearing control assembly (20) according to claim 10, **characterized in that** the outermost piece (74) comprises an embossed area (68) and the embossed area (68) defines an aperture (70) through which a portion of the rolling member (48) may pass and the innermost piece (66) defines an aperture (76) coaxial with the aperture (70) of the outermost piece (74), through which a portion of the rolling member (48) may pass.

12. The ball bearing control assembly (20) according to claim 11, **characterized in that** a portion of the embossed area (68) extends into one of the first or the second raceway (46, 28).

13. The ball bearing control assembly (220) according to claim 1, **characterized in that** the rolling members (248) have a diameter and the ball guide (250) is located between one of the pair of stationary races (238) and the force transmission member (226), wherein the majority of the rolling member (248) is constrained.

14. The ball bearing control assembly (220) of claim 13, **characterized in that** the ball guide (250) includes structure having a dimension (273) measured on a perpendicular between the force transmission member (226) and one of the pair of stationary races (238), and the length of the dimension (273) is equal to or greater than the majority of the rolling member (248).

15. The ball bearing control assembly (220) of claim 13, **characterized in that** the ball bearing control assembly (220) includes a free space dimension (274) measured on a perpendicular between the force transmission member (226) and one of the pair of stationary races (238), and wherein the ball guide (250) includes structure having an object dimension (270) measured on a perpendicular between the force transmission member (226) and one of the pair of stationary races (238), and the difference between the free space dimension (274) and the object dimension (270) is less than a diameter of the rolling member (248).
